# EUROPEAN PATENT SPECIFICATION

(11) **EP 1 545 148 B1**
(45) Date of publication and mention of the grant of the patent: **07.05.2014**
(21) Application number: 04106654.9
(22) Date of filing: 16.12.2004
(51) Int. Cl.: H04W 4/10, H04W 76/00, H04W 76/04, H04W 84/08

(54) **Method, cellular communication system and mobile station for improved handling of direct mode communications between mobile stations.**
Betriebsverfahren, System für zellulare Kommunikation und mobiles Gerät für verbesserte Handhabung von Direktmodus-Kommunikation zwischen mobilen Endgeräten
Procédé d'opération, système pour communication cellulaire et station mobile dotés d'une manipulation améliorée des communications en mode direct entre des términaux mobiles

(30) Priority: 17.12.2003 GB 0329175
(43) Date of publication of application: 22.06.2005
(73) Proprietor: Motorola Solutions Israel Limited, 70199 Airport City (IL)
(72) Inventor: Ofir, Gabi, 67899, TEL AVIV (IL); Dory, Dan, 67899, TEL AVIV (IL); Shevah, Itay, 67899, TEL AVIV (IL)
(74) Representative: Treleven, Colin

(56) References cited:
- EP-A1- 0 689 303
- EP-A2- 0 984 652
- WO-A1-01/62026
- WO-A1-95/12956
- WO-A1-96/25808
- WO-A1-96/27955
- DE-A1- 19 952 900

## Description

### Field of the invention

The invention relates to a cellular communication system, a mobile station and a method of operation therefor and in particular, but not exclusively, to direct mode operation in a TETRA (TErrestrial Trunked RAdio) communication system.

### Background of the Invention

In a cellular communication system a geographical region is divided into a number of cells each of which is served by a central station, also known as a base station. The base stations are interconnected by a static network which can communicate data between the base stations. A remote unit (also known as a mobile station) is served via a radio communication link by the base station of the cell within which the remote unit is situated.

As a remote unit moves, it may move from the coverage of one base station to the coverage of another, i.e. from one cell to another. As the remote unit moves towards base station, it enters a region of overlapping coverage of two base stations and within this overlap region it changes to be supported by the new base station. As the remote unit moves further into the new cell, it continues to be supported by the new base station. This is known as a handover or handoff of a remote unit between cells.

Communication from a remote unit to a base station is known as uplink, and communication from a base station to a remote unit is known as downlink.

The static network interconnecting the base stations is operable to route data between any two base stations, thereby enabling a remote unit in a cell to communicate with a mobile station in any other cell. In addition, the static network may comprise gateway functions for interconnecting to external networks such as the Public Switched Telephone Network (PSTN), thereby allowing remote units to communicate with landline telephones and other communication terminals connected by a landline. Furthermore, the static network comprises much of the functionality required for managing a conventional cellular communication network including functionality for routing data, admission control, resource allocation, subscriber billing, mobile station authentication etc.

Examples of cellular communication systems include both public cellular communication systems such as the Global System for Mobile communication (GSM) and Professional Mobile Radio (PMR) systems such as TETRA (TErrestrial Trunked RAdio).

TETRA is a Time Division Multiple Access (TDMA) system wherein 25 kHz wide channels, each abiding by the rule of division in time into fixed basic time blocks, referred to as Time Frames, and which are further divided into four time slots which may be individually assignable to logical channels. Each time slot in TETRA has a duration of 14.167 msecs and four timeslots are combined into a time frame having a duration of 56.67 msecs. Each of the four time slots in a frame may be individually allocated to the same or to different logical channels. Furthermore, the time frames are combined into multiframes comprising 18 time frames each. Frame number 18 is reserved as a control frame wherein control information may be communicated during an active service.

Although TETRA may be used as a public cellular communication system, it is designed to provide a number of features and services which are particularly suitable for private organisations or groups such as for example the emergency and public safety services.

For example TETRA provides a number of features and services for managing and controlling group calls as well as for managing the membership of these groups. Thus, TETRA provides services for making group calls wherein e.g. a voice message is quickly and efficiently relayed to a specific group of remote units. TETRA furthermore provides features for managing the membership of different groups, priorities of different groups etc.

TETRA provides for both acknowledged and non-acknowledged communication. For acknowledged services the individual call setup, for example, comprises the call originator receiving an acknowledgement indicating that the destination(s) has been reached. However, for non-acknowledged services no acknowledgement is received from the destination. Hence, non-acknowledged services do not guarantee that call setup, for example, is successful but has the advantage of providing for a very fast call setup. This is particularly useful for many push-to-talk group calls.

Other features and services provided by TETRA include a high level of security which may be optimised for specific purposes, push-to-talk channel allocation, broadcast calls etc.

In addition to trunked mode operation, wherein remote units communicate through a base station, TETRA provides for the possibility of direct communication between remote units without any intervening base station. In one aspect, this may allow a remote unit to act as a repeater for another remote unit. For example a vehicle mounted unit may act as a repeater for a portable unit thereby improving coverage for the portable unit.

Furthermore, TETRA supports direct mode communication between different remote units without the involvement of a base station. This is known as Direct Mode Operation (DMO) and allows remote units setting up and maintaining direct communication. Accordingly, in TETRA, communication may be supported even in areas which are not covered by a base station.

In TETRA DMO communication is established and performed without any reliance on or involvement of a base station. This is in contrast to trunked mode operation wherein a base station allocates channels, provides TDMA synchronisation information, provides information on other base stations etc. In DMO the responsibility for call setup, and for example, control and maintenance resides with the originating remote unit. Thus, the originating remote unit provides timing information, control information etc.

When initiating a new call, a remote unit needs to monitor the selected DMO frequency for a substantial amount of time to determine whether the channel is free or is already in use by another remote unit. This results in high power consumption and a slow call setup process. Furthermore, radio channels tend to be inefficiently used because they have to be monitored for long periods of time before a service may commence.

Furthermore, remote units need to monitor a DMO frequency frequently in order to determine if another remote unit is attempting to set up a DMO call with it. Several methods are known for detecting incoming DMO calls. For example, the remote unit may simply detect and measure the current energy intensity in the radio channel and if this exceeds a given threshold value, it is assumed that a proper DMO message is being transmitted. Accordingly, the remote unit proceeds to demodulate the message in order to determine if the message relates to the setting up of a DMO call with that remote unit.

In TETRA DMO, the remote terminals are not synchronised and accordingly a call instigation signal may be received at any time. This complicates the monitoring operation. Furthermore, the call setup of a DMO call requires a complete synchronisation between the originating remote unit and the called remote unit. Specifically all non-originating remote units must synchronize to the originating remote unit's synchronization RF signals. This results in a slow and complex call setup and may further increase the power consumption.

Also, a remote unit may join an ongoing DMO group call. However, this requires time and power consuming monitoring operations in order to synchronize with the on going service and this results in increased setup delays and power consumption.

Furthermore, physical radio channel (or equivalently radio frequency) allocation for DMO is very inflexible and accordingly inefficient. Specifically, a network operator typically uses a configuration manager to allocate physical radio channel or channels as either trunked radio channels (radio channels for communication via a base station) or as DMO channels for direct communication. The operator is typically provided with software tools that can be used to configure base stations as well as the participating remote units to implement the given radio channel or channels configuration. In addition, the remote units are configured to perform DMO operation on specific channels. For example, a remote unit is generally configured to access and monitor one specific radio channel for DMO private calls. Typically, as DMO may support different services, each radio channel is typically reserved for one specific service.

Hence although the system allows different services and DMO radio channels, this is a very inflexible and rigid allocation wherein one specific radio channel is reserved for a specific service and a specific group of remote units, irrespective of time dependent transient operational needs and activity loads. Equivalently, each remote unit is configured for one specific DMO channel for each service. Thus, the resource allocation is highly inflexible and accordingly suboptimal in a conventional TETRA system.

Hence, an improved cellular communication system and remote unit and method of operation therefor would be advantageous and in particular a system allowing reduced power consumption, increased performance, reduced complexity, increased flexibility, improved dynamic performance and/or reduced delays would be advantageous.

WO-A1-96/27955 provides a method for synchronising transmissions of mobile stations in a mobile radio system. A radio unit transmits accuracy information to first and second mobile stations on a direct mode channel. The accuracy information indicates the frequency that the radio will use in direct mode, and accuracy information comprising a bit, which indicates that the radio's transmit frequency exceeds that normally employed in direct mode. The first and second mobile stations tune their receivers to the indicated frequency. The first mobile station transmits to the second mobile station on the direct mode channel, using the indicated frequency.

### Summary of the Invention

Accordingly, the Invention seeks to preferably mitigate, alleviate or eliminate one or more of the above mentioned disadvantages singly or in any combination.

According to a first aspect of the invention, there is provided a mobile station having the features of appended independent claim 1. According to a second aspect of the invention, there is provided a cellular communication system having the features of appended independent claim 17. According to a third aspect of the invention, there is provided a method of operation of a mobile station having the steps of appended independent claim 23.

According to a first aspect of the invention there is provided a mobile station for a cellular communication system comprising at least one base station and a plurality of mobile stations, the communication system supporting direct mode communication and trunked mode communication; the mobile station comprising: means for entering a direct mode controller mode; means for transmitting direct mode control messages to other mobile stations; the direct mode control messages comprising information associated with radio channels for direct mode communication by two other mobile stations.

The mobile station according to the first aspect of the invention, herein referred to as a 'remote unit' is typically a stand alone mobile unit which is not connected to the static network of the cellular communication system. Furthermore, this remote unit may continuously operate in the direct mode controller mode and specifically the remote unit may be a dedicated direct mode controller unit comprising no other functionality or providing no other services. Alternatively, the remote unit may also be operable to perform other functions and provide other services and may specifically comprise functionality for additionally providing conventional communication services in accordance with the Technical Specifications of the cellular communication system. The trunked mode communication corresponds to a mode of communication which includes a base station in the communication path.

The Inventors of the present invention have realised that a number of disadvantages of the prior art can be overcome or mitigated by providing information associated with radio channels for direct mode communication to remote units that may be involved in direct mode calls and other services. A remote unit comprising functionality for entering a direct mode controller mode may e.g. provide for facilitated synchronisation, control resource allocation, perform centralised operations which otherwise must be performed by all individual remote units etc.

The invention may provide for an improved direct mode performance and may specifically allow reduced power consumption, increased flexibility including increased resource allocation flexibility, reduced delay and/or improved direct mode quality of service. The complexity of the remote unit providing the direct mode controller functionality may further be relatively simple and easy to implement. It may further be compatible with existing systems and may typically be introduced to a cellular communication system without requiring any changes or modifications to the static network equipment.

The term radio channel may refer to a radio carrier (or radio frequency). A radio carrier may further be divided into a plurality of individual logical radio channels and the term radio channel may alternatively or additionally refer to these individual logical radio channels.

According to a feature of the invention, the means for transmitting is operable to transmit the direct mode control messages on at least one of the radio channels for direct mode communication. This facilitates the reception of the direct mode control messages by direct mode remote units and typically reduces the modifications to the operation and functionality of the direct mode remote units.

According to a different feature of the invention, the means for transmitting is operable to transmit the direct mode control messages time multiplexed on a plurality of the radio channels for direct mode communication.

The remote unit may for example sequentially switch between different radio channels (or equivalently radio carriers or radio frequencies). The feature may provide a simple, effective and/or practical means of providing direct mode information on a plurality of direct mode radio channels thereby supporting direct mode remote units associated with different radio channels.

The direct mode control messages are not necessarily identical in all radio channels and may specifically comprise some shared information, some information related to other radio channels and some information related to the radio channel on which it is transmitted. Also, a radio channel in the form of a radio carrier may be divided between a plurality of logical radio channels and a plurality of direct mode control messages related to different radio logical channels may be transmitted on a radio carrier.

According to a different feature of the invention, the cellular communication system is a Time Division Multiple Access communication system employing time frames having a plurality of time slots and the means for transmitting is operable to time multiplex between the plurality of radio channels on a time frame basis.

For example, the remote unit may transmit direct mode control messages in a first time frame on a first radio channel then switch to a second radio channel and transmit direct mode control messages in a second time frame of this radio channel etc. Preferably, the different radio channels are time frame synchronised and preferably this synchronisation is provided by the remote unit itself when operating in the direct mode controller mode.

The feature provides for a practical, reliable and easy to implement way of communicating direct mode control messages in a plurality of radio channels.

According to a different feature of the invention, the means for transmitting is operable to transmit in at least a first time slot of a time frame, and the remote unit furthermore comprises a receiver operable to perform a radio measurement in at least a second time slot of the time frame.

Preferably the remote unit is operable to time multiplex between transmitting direct mode control messages and measuring. This provides for an advantageous implementation wherein radio measurements may be performed interchangeably with transmission of the direct mode control messages.

According to a different feature of the invention, the receiver is operable to determine a radio characteristic in response to the radio measurement, and the remote unit is operable to include information associated with the radio characteristic in the direct mode control messages.

This may reduce complexity and facilitate operation of direct mode remote units as these may be able to use the radio measurements of the control remote unit rather than have to perform these measurements themselves. The radio characteristic may for example relate to a measured interference level or to an indication of whether the current radio channel is available or engaged

According to a different feature of the invention, time frames of each of the plurality of radio channels is arranged in a multi-frame, each multi frame comprising a designated control frame, and the means for transmitting is operable to transmit direct mode control messages on each radio channel of the plurality of radio channels in the designated control frame of each radio channel of the plurality of radio channels.

This may provide for a particularly suitable implementation and may specifically result in no additional resource being required for the transmission of the direct mode control messages. For example, in a TETRA system, time frame 18 is reserved for control messages and is monitored by remote units for control messages. Accordingly the direct mode messages may advantageously be transmitted in time frame 18.

According to a different feature of the invention, the multi-frames of the plurality of radio channels are offset such that the designated control frames of the plurality of radio channels do not coincide.

The plurality of radio channels is preferably multi frame synchronised such that the control frames do not coincide or overlap. For example, in TETRA systems, up to 18 radio channels may be multi-frame synchronised in such a way that time frame number 18 of the individual radio channels do not overlap. Accordingly, the control remote unit may cycle through the 18 radio channels and for each radio channel transmit direct mode control messages in time frame 18 of that radio channel.

According to a different feature of the invention, information associated with a first radio channel of the plurality of radio channels is transmitted on a second radio channel of the plurality of radio channels.

This allows additional information related to other radio channels to be provided to remote units on a given radio channel. For example, the information may indicate that another radio channel is available thereby enabling the remote unit to switch to this channel and instigate a call without having to perform any measurements on the new channel. Thus, the feature may provide improved direct mode performance and may specifically provide for a more flexible direct mode operation of the cellular communication system.

According to a different feature of the invention, the remote unit does not comprise functionality for supporting a call between the remote unit and another remote unit.

The remote unit is preferably not a standard remote unit of the cellular communication system and is not capable of performing a standard service. This provides for a simple and low cost remote unit capable of controlling and/or facilitating direct mode operation.

According to a different feature of the invention, the direct mode control messages comprise synchronisation information.

This may substantially facilitate and/or improve synchronisation in the cellular communication system. For example, if all direct mode remote units synchronise to the controller remote unit, any two remote units will automatically be synchronised to each other thereby facilitating call setup and monitoring for incoming calls.

According to a different feature of the invention, the direct mode control messages comprise time frame information. This allows time frame synchronisation which is particularly advantageous.

According to a different feature of the invention, the direct mode control messages comprise time slot information. This allows time slot synchronisation which is particularly advantageous.

According to a different feature of the invention, the direct mode control messages comprise information indicating availability of one or more radio channels.

Preferably the direct mode messages comprise information which indicates whether one or more channels is free or busy. The information may relate to the radio channel in which the direct mode message is transmitted and/or may relate to other radio channels. This provides for a direct mode remote unit to be informed of the status of other radio channels without itself having to perform any measurements of the other radio channels. This may reduce delay, reduce power consumption and increase flexibility.

According to a different feature of the invention, the direct mode control messages comprise information indicating a current use of one or more radio channels. Preferably the direct mode control messages comprise information indicating service type associated with one or more radio channels.

Different radio channels may for example be reserved for different service types and the direct mode messages may comprise information indicating associations between radio channels and supported services. This provides for a practical way of informing remote units of suitable radio channels for individual services. It further provides for a flexible system where associations between radio channels and services may be dynamically modified rather than having a fixed reservation of radio channels for specific services.

According to a different feature of the invention, at least one of the direct mode control messages comprise an identification of a remote unit associated with a service on a radio channel of the plurality of radio channels.

Preferably the direct mode messages comprise information indicating an identification of each remote unit actively involved in a direct mode service. The identification may be of the individual remote unit or of a group to which the remote unit belongs. This provides other remote units with information that enables them to readily join an ongoing call. Furthermore, the remote units are not limited to joining calls on the radio channel they are currently on but may switch to other radio channels in response to the information. The remote units thus do not need to perform any measurements or monitor any ongoing communication to detect a desired ongoing service.

The remote unit is preferably a TETRA remote unit operable to operate in accordance with the TETRA technical specifications.

According to a second aspect of the invention, there is provided a cellular communication system comprising at least one central station and a plurality of remote units, the communication system supporting direct mode communication and trunked mode communication; the cellular communication system comprising: a control remote unit comprising: means for entering a direct mode controller mode; means for transmitting direct mode control messages to other remote units; the direct mode control messages comprising information associated with radio channels for direct mode communication by at least a first and second remote unit.

According to a feature of the invention, the first remote unit comprises means for receiving the direct mode control messages and means for synchronising to the control remote unit in response to the direct mode control messages.

This provides for a suitable means of synchronising a remote unit to the control remote unit and thereby to other direct mode remote units.

According to a different feature of the invention, the first remote unit is operable to initiate a direct mode call and the first remote unit further comprises means for controlling the direct mode call. Preferably the control remote unit does not comprise functionality for managing an active direct mode call.

Preferably the operation of the first remote unit in idle mode is controlled by the control remote unit in that the idle mode operation of the first remote unit depends on the information of the direct mode messages. However, an active call is preferably controlled by the first remote unit and in particular is controlled by the first remote unit when this is the originator of a direct mode call. For example, in a TETRA system, the operation of the first remote unit in idle mode is in response to and as controlled by the control remote unit through the direct mode messages. However, when an active call is initiated by the first remote unit this call is controlled by the first remote unit in the same way as a direct mode call is handled in a conventional TETRA system.

This may provide for a particularly advantageous and efficient division of functionality between the different remote units.

According to a different feature of the invention, the first remote unit comprises a transceiver operable to receive the direct mode control messages on a first radio channel; means for determining a desired second radio channel in response to the direct mode control messages; and means for adjusting the transceiver to operate on the second radio channel.

Any suitable criterion or algorithm for determining a desired second radio channel may be used. Specifically, the remote unit may for example move to the second radio channel in order to support a desired service or to join a desired call. The direct mode messages will allow the remote unit not only to determine a suitable second radio channel but also to be synchronised to this from the start.

Preferably, the cellular communication system is a TETRA cellular communication system.

According to a third aspect of the invention, there is provided a method of operation for a remote unit of a cellular communication system comprising at least one central station and a plurality of remote units, the communication system supporting direct mode communication and trunked mode communication; the method comprising the steps of: entering a direct mode controller mode; transmitting direct mode control messages to other remote units; the direct mode control messages comprising information associated with radio channels for direct mode communication by two other remote units.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a segment of a TETRA cellular communication system; and
FIG. 2 illustrates a block diagram of a direct mode control remote unit in accordance with an embodiment of the invention.

### Detailed Description of a Preferred Embodiment of the Invention

The following description focuses on an embodiment of the invention applicable to a TETRA cellular radio communication system but it will be appreciated that the invention is not limited to this application but may be applied to many other cellular radio communication systems.

In the following the term radio channel is used with reference to a radio carrier or frequency of the cellular communication system. However it will be appreciated that the term radio channel is not limited to this interpretation and may for example also refer to one of a plurality of individual radio channels supported on a radio carrier.

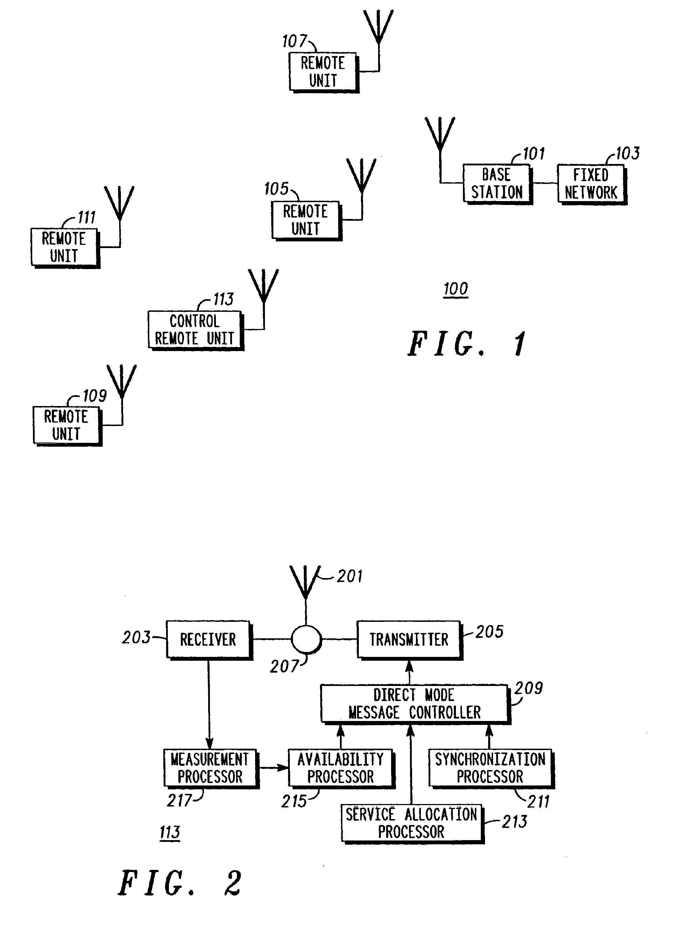

FIG. 1 illustrates a segment of a TETRA cellular communication system 100. FIG. 1 illustrates a single base station 101 connected to the fixed network 103 of the cellular communication system 100. Four communication remote units 105, 107, 109, 111 are shown in FIG. 1. The first and second remote unit 105, 107 are within the coverage area of the base station 101 and may communicate over the base station in trunked mode. The third and fourth remote unit 109, 111 are in the example outside the coverage area of the base station 101 and cannot communicate in trunked mode via the base station 101. However, all communication remotes 105, 107, 109, 111 may take part in Direct Mode (DMO) communications. This communication is directly between two or between one to many remote units and does not involve a base station. The DMO communication takes place in radio channels which have been reserved for DMO communication. 1

In accordance with the described embodiment, the cellular radio communication system 100 further comprises a control remote unit 113 which is operable to transmit direct mode control messages to other remote units 105-111 as will be described in more detail in the following.

FIG. 2 illustrates a block diagram of a DMO control remote unit 113 in accordance with an embodiment of the invention.

The control remote unit 113 comprises an antenna 201 coupled to a receiver 203 and a transmitter 205 through a switch 207 which provides isolation such that the receiver 203 and transmitter 205 may be alternately coupled to the same antenna 201 by quickly switching the coupling between receiver 203 and transmitter 205.

The control remote unit 113 further comprises a direct mode controller 209 which is operable to enter the control remote unit 113 into a direct mode controller mode and to control the operation of the control remote unit 113 in this mode. Specifically, the control remote unit 113 may be a dedicated unit which always operates in the direct mode controller mode.

In the direct mode controller mode, the direct mode controller 209 is operable to generate direct mode control messages comprising information associated with the radio channels which are reserved for direct mode communication. The direct mode controller 209 is further operable to control the transmitter to transmit the direct mode messages as will be described in the following.

The direct mode messages transmitted by the direct mode controller 209 comprise information that facilitates DMO operation for the other remote units 105-111. Preferably, the direct mode controller 209 is operable to transmit information which assists or controls the DMO idle mode and call setup operation of the remote units 105-111. However, in the described embodiment an ongoing DMO call is managed and controlled by the originating remote unit as in a conventional TETRA communication system and the control remote unit 113 is not involved in the control or management of an active direct mode call.

Conventional DMO operation in a TETRA communication system is unsynchronised and re-synchronisation between remote units is required every time a direct call is set-up.

However, in accordance with the described embodiment, the control remote unit 113 comprises a synchronisation processor 211 coupled to the direct mode controller 209. The synchronisation processor 211 is operable to generate synchronisation information, and the direct mode controller 209 is operable to control operation of the control remote unit 113 such that the direct mode messages comprise relevant synchronisation information.

Specifically, in the described embodiment, the synchronisation processor 211 is operable to generate a precise time base corresponding to the multi-frame, time frame, and time slot timing of a conventional TETRA system. This timing information is used by the direct mode controller 209 to transmit the direct mode messages in accordance with a TETRA timing scheme. Specifically, a direct mode message may have a duration corresponding to a time slot and be transmitted in time intervals consistent with TETRA timings. For example, a direct mode message associated with a specific radio channel may be transmitted in what equates to time slot 10f every 18^{th} time frame corresponding to one direct mode message being transmitted per multi frame.

Thus, the synchronisation information of the direct mode messages may simply be comprised in the timing of the direct mode message transmissions. However, preferably the direct mode messages furthermore comprise specific synchronisation information including specific multi frame, time frame and time slot values. For example, the direct mode messages transmitted on a radio channel may comprise information indicating that it is transmitted in time slot 1 and time frame 18 of a multi frame that is incremented by one for every direct mode message. This will allow any remote unit receiving the direct mode messages to synchronise to the time slot, time frame and multi frame time base of the control remote unit 113. Accordingly, if a plurality of remote units synchronise to the direct mode messages the remote units may be synchronised to the TETRA timing introduced by the control remote unit, and thereby may be synchronised not only to this but also to each other. Accordingly, call monitoring and setup may be significantly facilitated as the remote units are already synchronised. Furthermore, this may reduce power consumption as repeated synchronisations are not required and as the synchronisation between remote units may facilitate monitoring for call instigation messages.

In the described embodiment, the control remote unit 113 is operable to time multiplex between radio channels and to sequentially transmit direct mode messages on different radio channels. This time multiplexing is particularly suitable for TDMA systems, such as TETRA, which already employ a time multiplexing structure.

Specifically, in the described embodiment, the control remote unit 113 switches between different radio channels on a time frame basis such that it operates on one radio channel for a duration of one time frame, corresponding to four time slots for TETRA, before moving on to the next radio channel.

Some TDMA communication systems reserve a time frame in each multi frame for control information. For example, in TETRA, frame number 18 on each radio channel is designated as a control frame. In the described embodiment, the control remote unit 113 transmits the direct mode messages in this time frame on a first radio channel, then moves to another radio channel and transmits in the subsequent time frame etc. However, as the timing frame work is provided by the remote unit, this is preferably set up such that the time frames between the different time channels are offset in such a way that the designated control frames of different radio channels do not coincide and preferably do not overlap. In the described embodiment, this may simply be achieved by the direct mode messages indicating that the current time frame is always time frame 18.

As an example, the control remote unit 113 will first transmit a direct mode message on radio channel A in a given time frame interval. It will include the information that the direct mode message is transmitted in time frame 18 of the multi frame and any remote unit monitoring radio channel A will accordingly synchronise to this timing. The remote control unit 113 will then move to radio channel B and transmit a direct mode message on this. This direct mode message will also include information that the direct mode message is transmitted in time frame 18 of the multi frame and any remote unit monitoring radio channel B will accordingly synchronise to this timing. Thus, the multi frames of the different radio channels will be staggered allowing for the control frames to occur in different time intervals. Accordingly, a single transmitter may be time multiplexed between up to 18 radio channels and thus a simple and low cost remote unit may be implemented.

The transmission of the direct mode messages in the designated control frames provides simplified operation and compatibility with the conventional operation of remote units thereby facilitating introduction of the control remote unit 113.

The direct mode messages may additionally or alternatively provide other information which facilitates or controls the direct mode operation of the communication remote units 105-111. In the described embodiment, the control remote unit 113 further comprises a service allocation processor 213 which is operable to generate information relating to an allocation of radio channels for different purposes or uses. Specifically, the communication system may reserve specific direct mode radio channels for specific services. For example, radio channel A may be allocated to group calls for a first set of remote units, radio channel B may be allocated to group calls for a second set of remote units, radio channel C may be allocated to data calls for the first set of remote units etc. This information may be determined or generated by the service allocation processor 213 and fed to the direct mode controller 209 which may then include it in the direct mode messages. Accordingly, any remote unit receiving a direct mode message may be informed of the current reservation or allocation of radio channels.

Thus, in contrast to a conventional system wherein a rigid reservation of radio channels for specific services is used in order to enable remote units to select an appropriate radio channel, the current embodiment allows a flexible and dynamic use of radio channels. For example, the reservation of radio channels may be varied for different times of the day in order to accommodate changes in the service requirements during a day, reservations may be changed to reflect changes in the remote unit type distribution simply by changing the information comprised in the direct mode messages etc. Furthermore, there is no requirement for a remote unit to be configured for a specific radio channel or reservation.

The service allocation processor 213 may itself be the controller which generates the service allocation or reservation information or it may receive this information from external means. In a simple embodiment, the service allocation processor 213 may simply consist in a suitable data storage wherein the information is permanently or semi-permanently stored for retrieval by the direct mode controller 209.

In the described embodiment, the direct mode messages do not comprise information related only to the radio channel on which it is transmitted but also to other radio channels. For example, the reservation information preferably does not only include information indicating allocation or reservation of the current radio channel but also comprises information of which services other radio channels are allocated to. This may enable a multi service remote unit to quickly determine a radio channel which is suitable for the current service and directly move to this radio channel without requiring that radio channels are scanned or monitored in order to determine a suitable service.

In the described embodiment, the control remote unit 113 further comprises an availability processor 215 coupled to the direct mode controller 209. The availability processor 215 is operable to determine the availability of preferably all of the direct mode radio channels. Specifically, the availability processor 215 determines which of the radio channels are occupied and which are available for use for new services. The availability information preferably relates to each individual time slot or logical channel on the radio channel rather than the radio carrier as a whole.

Any suitable method for determining the availability of radio channels may be used but in the described embodiment the control remote unit 113 determines the availability based on measurements of the radio characteristics on the radio channels. Accordingly, the control remote unit 113 comprises a measurement processor 217 coupled to the receiver 203 and the availability processor 215. The receiver 203 is operable to measure a radio signal and feed the measurement to the measurement processor 217. The measurement processor 217 then processes the measurements to determine a suitable radio characteristic. In a simple embodiment, the radio characteristic may simply be a radio signal strength of the appropriate radio channel or sub-channel.

The radio characteristic is fed to the availability processor 215 which determines the availability of the measured channel in response to the radio characteristic. In a simple embodiment, the radio channel or sub-channel may be considered to be occupied if the measured signal power is above a given threshold for a given duration thereby suggesting that transmission is taking place on the radio channel. If the measured signal power is below the threshold, the radio channel or sub-channel is considered to be free. It will be appreciated that other and more complex algorithms or criteria for detecting communication on radio channels may be used without detracting from the invention.

In the described embodiment, the availability processor 215 determines an availability of all radio channels or sub-channels and includes this information in all direct mode messages. Thus, a remote unit receiving a direct mode message is not only informed of the characteristics of the radio channel it is currently operating on but also all other radio channels.

It will be appreciated that the measurement and radio characteristic may relate to many other parameters of the radio channels and that the direct mode messages may include information related to a number of characteristics. For example, the control remote unit 113 may perform measurements to determine an interference level on the radio channels and provide this information to the communication remote units 105-111. This may allow the remote units 105-111 to select a radio channel with low interference when setting up a service thereby improving performance for the individual service.

As described a number of measurements required or desired for direct mode operation may in the described embodiment be performed centrally by the control remote unit 113 rather than by each of the remote units individually. For example, in accordance with the embodiment, in advance of setting up a direct mode call, a remote unit may receive a direct mode message which allows it to directly determine an unoccupied channel suitable for the desired service. It may thus quickly instigate the service on this channel and the requirement for individual monitoring of channels prior to service setup is obviated or substantially reduced.

In the described embodiment, transmission of direct mode messages occur for only a subset of the time slots of a given frame and the remaining time slots are used for performing radio measurements, e.g. to determine whether a channel is occupied. Hence, the transmission of direct mode messages and the measurements of the radio environment are time multiplexed. This may reduce the interference to the measurement process from a strong transmit signal of the control remote unit 113 and may further reduce complexity of the control remote unit 113. For example, by enabling the use of a switch 207 rather than a duplexer.

As another example of information which may alternatively or additionally be included in direct mode messages is an identification of a remote unit associated with a service on a radio channel. Specifically, the direct mode messages may comprise a listing of the identities or addresses of all remote units involved in an ongoing call on any of the direct mode radio channels. Preferably, the direct mode messages also comprise information of characteristics of the communication (e.g. radio channel, time slot etc) which are required for a different remote unit to join the ongoing call. Accordingly, a remote unit in idle mode on a given channel may be informed of all ongoing communications. If the remote unit detects that an ongoing service is taking place that it may preferably join, it can readily switch to the appropriate radio channel and join the service. This may be done very speedily as the remote units are already synchronised.

In the described embodiment, the control remote unit 113 is a dedicated remote unit which facilitates direct mode operation. In the embodiment, the remote unit comprises no functionality for receiving a communication in accordance with the Technical Specifications of the cellular communication system. Indeed, in the described embodiment, the control remote unit 113 comprises no functionality for receiving any communication over the air interface but only comprises a simple measurement receiver. Accordingly, a very simple and low cost control remote unit 113 may be implemented and introduced to a cellular communication system without requiring any modifications to the fixed network.

Furthermore, in the described embodiment, the control remote unit 113 transmits direct mode messages which do not relate to the specific management or control of active DMO calls. Rather the control and management of active calls are performed by the initiating remote unit as opposed to a trunked TETRA communication system.

The invention can be implemented in any suitable form including hardware, software, firmware or any combination of these. However, preferably, the invention is implemented partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is defined by the accompanying claims. In the claims, the term comprising does not exclude the presence of other elements or steps.

Furthermore, although individually listed, a plurality of means, elements or method steps may be implemented by e.g. a single unit or processor.

## Claims

1. A mobile station (113) for a cellular communication system (100) comprising at least one base station (101) and a plurality of other mobile stations (105, 107, 109, 111), the communication system supporting time division multiple access, TDMA, direct mode communication and trunked mode communication between the mobile stations (105, 107, 109, 111), the mobile station (113) comprising:
means (209) for entering a direct mode controller mode;
a synchronisation processor (211) for generating a synchronisation time base for direct mode communications by the other mobile stations (105, 107, 109, 111) in the plurality;
means (209, 205) for transmitting direct mode control messages to the other mobile stations (105, 107, 109, 111) on a plurality of available direct mode communication channels in accordance with the generated synchronisation time base, the direct mode control messages being transmitted for use by the other mobile stations (105, 107, 109, 111) in setting up a direct mode call synchronised to the synchronisation time base and being transmitted in advance of call setup of the direct mode call synchronised to the synchronisation time base;
the direct mode control messages comprising:
(i) information identifying the plurality of available direct mode communication channels available for the direct mode call between at least two (109, 111) of the other mobile stations (105, 107, 109, 111) in the plurality; and
(ii) synchronisation information produced by the synchronisation processor (211).

2. A mobile station (113) as claimed in claim 1 wherein the means (209, 205) for transmitting is operable to transmit the direct mode control messages time multiplexed across the plurality of available direct mode communication channels.

3. A mobile station (113) as claimed in claim 2 or claim 3 wherein the communication system (100) employs time frames having a plurality of time slots and wherein the means (209, 205) for transmitting is operable to time multiplex between the plurality of available direct mode communication channels on a time frame basis.

4. A mobile station (113) as claimed in claim 3 wherein the means (209, 205) for transmitting is operable to transmit in at least a first time slot of a time frame and the mobile station (113) further comprises a receiver (213, 217) operable to perform a radio measurement in at least a second time slot of the time frame.

5. A mobile station (113) as claimed in claim 4 wherein the receiver (213, 217) is operable to determine a radio characteristic in response to the radio measurement and the mobile station (113) is operable to include information associated with the radio characteristic in the transmitted direct mode control messages.

6. A mobile station (113) as claimed in any one of claims 3 to 5 wherein time frames of each of the plurality of available direct mode communication channels are arranged in a multi-frame, each multi frame comprising a designated control frame, and the means (209, 205) for transmitting is operable to transmit the direct mode control messages on each channel of the plurality of available direct mode communication channels in the designated control frame of each channel of the plurality of available direct mode communication channels.

7. A mobile station (113) as claimed in claim 6 wherein the multi-frames of the plurality of available direct mode communication channels are offset such that the designated control frames of the plurality of available direct mode communication radio channels do not coincide.

8. A mobile station (113) as claimed in any one of claims 2 to 7 wherein information associated with a first available direct mode communication channel of the plurality of available direct mode communication channels is transmitted on a second available direct mode communication channel of the plurality of direct mode communication radio channels.

9. A mobile station (113) as claimed in any one preceding claim wherein the mobile station (113) lacks functionality for supporting a service between the mobile station (113) and another mobile station.

10. A mobile station (113) as claimed in any one preceding claim wherein the synchronisation information comprises time frame information identifying a time frame in which the direct mode control message is being transmitted.

11. A mobile station (113) as claimed in any one preceding claim wherein the synchronisation information comprises time slot information identifying a time slot in which the direct mode control message is being transmitted,

12. A mobile station (113) as claimed in any one preceding claim wherein the direct mode control messages comprise information indicating availability of each individual time slot or logical channel for each of the plurality of available direct mode communication channels.

13. A mobile station (113) as claimed in any one preceding claim wherein the direct mode control messages comprise information indicating a specific service reservation of one or more of the plurality of direct mode communication channels.

14. A mobile station (113) as claimed in any one preceding claim wherein the direct mode control messages comprise information indicating a specific service reservation of each of the plurality of direct mode communication channels.

15. A mobile station (113) as claimed in any one preceding claim wherein at least one of the direct mode control messages comprises an identification of a remote unit associated with an ongoing call on any of the plurality of direct mode communication channels.

16. A mobile station (113) as claimed in any one preceding claim wherein the mobile station (113) is operable in accordance with the TETRA standard procedures.

17. A cellular communication system (100) comprising at least one base station (101), a control mobile station (113) and a plurality of other mobile stations (105, 107, 109, 111), the communication system (100) supporting time division multiple access, TDMA, direct mode communication and trunked mode communication; the control mobile station (113) comprising:
means (209) for entering a direct mode controller mode;
a synchronisation processor (211) for generating a synchronisation time base for direct mode communications by the other mobile stations (105, 107, 109, 111) in the plurality;
means (209, 205) for transmitting direct mode control messages to the other mobile stations (105, 107, 109, 111) on a plurality of available direct mode communication channels in accordance with the generated synchronisation time base, the direct mode control messages being transmitted for use by the other mobile stations (105, 107, 109, 111) in setting up a direct mode call synchronised to the synchronisation time base and being transmitted in advance of call setup of the direct mode call synchronised to the synchronisation time base;
the direct mode control messages comprising:
(i) information identifying the plurality of available direct mode communication channels available for the direct mode call between at least first (109) and second (111) mobile stations out of the plurality of the other mobile stations (105, 107, 109, 111); and
(ii) synchronisation information produced by the synchronisation processor (211).

18. A cellular communication system (100) as claimed in claim 17 wherein the first mobile station (109) comprises:
means for receiving the direct mode control messages, and
means for synchronising to the control mobile station (113) in response to receiving the direct mode control messages.

19. A cellular communication system (100) as claimed in claim 17 or claim 18 wherein the first mobile station (109) is operable to initiate a direct mode service and the first (109) mobile station further includes means for controlling the direct mode service.

20. A cellular communication system (100) as claimed in any one of claims 17 to 19 wherein the control mobile station (113) lacks functionality for managing an active direct mode service.

21. A cellular communication system (100) as claimed in any of the claims 17 to 20 wherein the first mobile station (109) comprises:
a transceiver operable to receive the direct mode control messages on a first available direct mode communication channel of the plurality of available direct mode communication channels;
means for determining a desired second available direct mode communication channel in response to the available direct mode communication channels indicated in the direct mode control messages; and
means for adjusting the transceiver to operate on the second available direct mode communication channel in accordance with the synchronisation information included in the direct mode control messages.

22. A cellular communication system (100) as claimed in any of the claims 17 to 21 wherein the cellular communication system (100) is a TETRA cellular communication system.

23. A method of operation for a mobile station (113) of a cellular communication system (100) comprising at least one base station (101) and a plurality of other mobile stations (105, 107, 109, 111), the communication system (100) supporting time division multiple access, TDMA, direct mode communication and trunked mode communication between the mobile stations; the method comprising the steps of:
entering a direct mode controller mode;
generating a synchronisation time base for direct mode communications by the other mobile stations (105, 107, 109, 111) in the plurality; and
transmitting direct mode control messages to other mobile stations (105, 107, 109, 111) on a plurality of available direct mode communication channels in accordance with the generated synchronisation time base, the direct mode control messages being transmitted for use by the other mobile stations (105, 107, 109, 111) in setting up a direct mode call synchronised to the synchronisation time base and being transmitted in advance of call setup of the direct mode call synchronised to the synchronisation time base;
the direct mode control messages comprising:
(i) information identifying the plurality of available direct mode communication channels available for the direct mode call between at least two (109, 111) other mobile stations; and
(ii) synchronisation information produced by a synchronisation processor (211).

24. A method as claimed in claim 23, wherein the synchronisation information comprises at least one of time frame information and time slot information, identifying the time frame and the time slot in which the direct mode control message is being transmitted.

## Patentansprüche

1. Mobilstation (113) für ein zellulares Kommunikationssystem (100) mit wenigstens einer Basisstation (101) und einer Mehrzahl anderer Mobilstationen (105, 107, 109, 111), wobei das Kommunikationssystem eine TDMA-Kommunikation ("time division multiple access") mit direkter Betriebsart und einer Kommunikation mit Bündelbetriebsart ("trunked mode") zwischen den Mobilstationen (105, 107, 109, 111) unterstützt wobei die Mobilstation (113) umfasst:
Mittel (209) zum Eintritt in eine Controllerbetriebsart für eine direkte Betriebsart;
einen Synchronisationsprozessor (211) zum Erzeugen einer Synchronisationszeitbasis für Kommunikationen mit direkter Betriebsart durch die anderen Mobilstationen (105, 107, 109, 111) in der Mehrzahl;
Mittel (209, 205) zum Senden von Steuernachrichten für eine direkte Betriebsart zu den anderen Mobilstationen (105, 107, 109, 111) ab einer Mehrzahl verfügbarer Kommunikationskanäle für eine direkte Betriebsart in Übereinstimmung mit der erzeugten Synchronisationszeitbasis, wobei die Steuernachrichten für eine direkte Betriebsart zur Verwendung durch die anderen Mobilstationen (105, 107, 109, 111) zum Aufbauen eines Anrufs mit direkter Betriebsart gesendet werden, der mit der Synchronisationszeitbasis synchronisiert ist und vor einem Anrufaufbau des Anrufs in direkter Betriebsart, der mit der Synchronisationszeitbasis synchronisiert ist, gesendet wird;
wobei die Steuernachricht für die direkte Betriebsart umfasst:
(i) Information, die die Mehrzahl verfügbarer Kommunikationskanäle für eine direkte Betriebsart identifizieren, welche für den Anruf mit direkter Betriebsart zwischen wenigstens zwei (109, 111) der anderen Mobilstationen (105, 107, 109, 111) in der Mehrzahl verfügbar sind; und
(ii) Synchronisationsinformation, die durch den Synchronisationsprozessor (211) erzeugt wird.

2. Mobilstation (113) im Anspruch 1, wobei die Mittel (209, 205) zum Senden so betreibbar sind, dass die Steuernachrichten für eine direkte Betriebsart im Zeitmultiplex über die Mehrzahl verfügbarer Kommunikationskanäle für eine direkte Betriebsart gesendet werden.

3. Mobilstation (113) nach Anspruch 2 oder Anspruch 3, wobei das Kommunikationssystem (100) Zeitrahmen mit einer Mehrzahl von Zeitschlitzen zur Verfügung stellt und wobei die Mittel (209, 205) zum Senden betreibbar sind, um ein Zeitmultiplex zwischen der Mehrzahl von verfügbaren Kommunikationskanälen für eine direkte Betriebsart auf einer Zeitrahmenbasis durchzuführen.

4. Mobilstation (113) nach Anspruch 3, wobei die Mittel (209, 205) zum Senden betreibbar sind, um in wenigstens einem ersten Zeitschlitz eines Zeitrahmens zu senden und die Mobilstation (113) weiterhin einen Empfänger (213, 217) umfasst, der betreibbar ist, um eine Funkmessung in wenigstens einem zweiten Zeitschlitz des Zeitrahmens durchzuführen.

5. Mobilstation (113) nach Anspruch 4, wobei der Empfänger (213, 217) betreibbar ist, um eine Funkcharakteristik in Abhängigkeit der Funkmessung zu bestimmen und die Mobilstation (113) betreibbar ist, um die Information, die mit der Funkcharakteristik in den gesendeten Steuernachrichten für eine direkte Betriebsart in Verbindung stehen, einzubinden.

6. Mobilstation (113) nach einem der Ansprüche 3 bis 5, wobei Zeitrahmen für jede der Mehrzahl verfügbarer Kommunikationskanäle für eine direkte Betriebsart in einem Mehrfachrahmen angeordnet sind, wobei jeder Mehrfachrahmen einen zugewiesenen Steuerrahmen umfasst, und wobei die Mittel (209, 205) zum Senden betreibbar sind, um die Steuernachrichten für eine direkte Betriebsart auf jedem Kanal der Mehrzahl verfügbarer Kommunikationskanäle für eine direkte Betriebsart in dem designierten Steuerrahmen von jedem Kanal der Mehrzahl verfügbarer Kommunikationskanäle für eine direkte Betriebsart zu senden.

7. Mobilstation (113) nach Anspruch 6, wobei die Mehrfachrahmen der Mehrzahl verfügbarer Kommunikationskanäle für eine direkte Betriebsart einen Versatz aufweisen, so dass die designierten Steuerrahmen der Mehrzahl verfügbarer Kommunikationsfunkkanäle für eine direkte Betriebsart nicht zusammenfallen.

8. Mobilstation (113) nach einem der Ansprüche 2 bis 7, wobei Information, die mit einem ersten verfügbaren Kommunikationskanal für eine direkte Betriebsart aus der Mehrzahl von verfügbaren Kommunikationskanälen für eine direkte Betriebsart in Verbindung steht, auf einem zweiten verfügbaren Kommunikationskanal für eine direkte Betriebsart aus der Mehrzahl von Kommunikationsfunkkanälen für eine direkte Betriebsart gesendet wird.

9. Mobilstation (113) nach einem der vorhergehenden Ansprüche, wobei der Mobilstation (113) Funktionalität zur Unterstützung eines Services zwischen der Mobilstation (113) und einer anderen Mobilstation fehlt.

10. Mobilstation (113) nach einem der vorhergehenden Ansprüche, wobei die Synchronisationsinformation Zeitrahmeninformation umfasst, die einen Zeitrahmen identifiziert, in dem die Steuernachricht für eine direkte Betriebsart gesendet wird.

11. Mobilstation (113) nach einem der vorhergehenden Ansprüche, wobei die Synchronisationsinformation Zeitschlitzinformation umfasst, die einen Zeitschlitz identifiziert, in dem die Steuernachricht für eine direkte Betriebsart gesendet wird.

12. Mobilstation (113) nach einem der vorhergehenden Ansprüche, wobei die Steuernachricht für eine direkte Betriebsart Information umfasst, die eine Verfügbarkeit von jedem individuellen Zeitschlitz oder logischen Kanal für jede der Mehrzahl verfügbarer Kommunikationskanäle für eine direkte Betriebsart umfasst.

13. Mobilstation (113) nach einem der vorhergehenden Ansprüche, wobei die Steuernachrichten für eine direkte Betriebsart Informationen umfassen, die eine spezielle Servicereservierung von einem oder mehreren der Mehrzahl von Kommunikationskanälen für eine direkte Betriebsart anzeigt.

14. Mobilstation (113) nach einem der vorhergehenden Ansprüche, wobei die Steuernachrichten für eine direkte Betriebsart Information umfassen, die eine spezifische Servicereservierung von jedem der Mehrzahl von Kommunikationskanälen für eine direkte Betriebsart anzeigt.

15. Mobilstation (113) nach einem der vorhergehenden Ansprüche, wobei wenigstens eine der Steuernachrichten für eine direkte Betriebsart eine Identifizierung einer entfernten Einheit umfasst, die mit einem laufenden Anruf auf irgendeinen der Mehrzahl von Kommunikationskanälen für eine direkte Betriebsart in Verbindung steht.

16. Mobilstation (113) nach einem der vorhergehenden Ansprüche, wobei die Mobilstation (113) gemäß dem TETRA-Standartverfahren betreibbar ist.

17. Zellulares Kommunikationssystem (100) mit wenigstens einer Basisstation (101), eine mobilen Steuerstation (113) und einer Mehrzahl anderer Mobilstationen (105, 107, 109, 111), wobei das Kommunikationssystem (100) eine TDMA-Kommunikation ("time division, multiple, access") für eine direkte Betriebsart und eine Kommunikation für eine Bündelbetriebsart ("trunked mode") unterstützt; wobei die mobile Steuerstation (113) umfasst:
Mittel (209) zum Eintritt in eine Controllerbetriebsart für eine direkte Betriebsart;
einen Synchronisationsprozessor (211) zum Erzeugen einer Synchronisationszeitbasis für Kommunikationen mit direkter Betriebsart durch die anderen Mobilstationen (105, 107, 109, 111) in der Mehrzahlt;
Mittel (209, 205) zum Senden Steuernachrichten für eine direkte Betriebsart zu den anderen Mobilstationen (105, 107, 109, 111) ab einer Mehrzahl verfügbarer Kommunikationskanäle für eine direkte Betriebsart in Übereinstimmung mit der erzeugten Synchronisationszeitbasis, wobei die Steuernachrichten für eine direkte Betriebsart zur Verwendung durch die andere Mobilstation (105, 107, 109, 111) zum Aufbauen eines Anrufs mit direkter Betriebsart gesendet werden, der mit der Synchronisationszeitbasis synchronisiert ist und vor einem Anrufaufbau des Anrufs in direkter Betriebsart, der mit der Synchronisationszeitbasis synchronisiert ist, gesendet wird;
wobei die Steuernachricht für die direkte Betriebsart umfasst:
(i) Information, die die Mehrzahl verfügbarer Kommunikationskanäle für eine direkte Betriebsart identifizieren, welche für den Anruf mit direkter Betriebsart zwischen wenigstens einer ersten (109) und einer zweiten (111) Mobilstation aus der Mehrzahl der anderen Mobilstationen (105, 107, 109, 111) verfügbar sind; und
(ii) Synchronisationsinformation, die durch den Synchronisationsprozessor (211) erzeugt wird.

18. Zellulares Kommunikationssystem (100) nach Anspruch 7, wobei die erste Mobilstation (109) umfasst:
Mittel zum Empfangen der Steuernachrichten für eine direkte Betriebsart, und
Mittel zum Synchronisieren der mobilen Steuerstation (113) in Abhängigkeit von dem Empfangen der Steuernachrichten für eine direkte Betriebsart.

19. Zellulares Kommunikationssystem (100) nach Anspruch 17 oder Anspruch 18, wobei die erste Mobilstation (109) betreibbar ist, um einen Service für eine direkte Betriebsart zu initiieren und die erste (109) Mobilstation weiterhin Mittel zum Steuern des Services für eine direkte Betriebsart enthält.

20. Zellulares Kommunikationssystem (100) nach einem der Ansprüche 17 bis 19, wobei der mobilen Steuerstation (113) Funktionalität zum Handhaben eines aktiven Services für eine direkte Betriebsart fehlt.

21. Zellulares Kommunikationssystem (100) nach einem der Ansprüche 17 bis 20, wobei die erste Mobilstation (109) umfasst:
einen Transceiver, der betreibbar ist, um die Steuernachrichten für eine direkte Betriebsart auf einem ersten verfügbaren Kommunikationskanal für eine direkte Betriebsart aus der Mehrzahl verfügbarer Kommunikationskanäle für eine direkte Betriebsart zu empfangen;
Mittel zum Bestimmen eines erwünschten zweiten verfügbaren Kommunikationskanal für eine direkte Betriebsart in Abhängigkeit der verfügbaren Kommunikationskanäle für eine direkte Betriebsart, welche in den Steuernachrichten für eine direkte Betriebsart angezeigt werden; und
Mittel zum Einstellen des Transceivers um auf dem zweiten verfügbaren Kommunikationskanal für eine direkte Betriebsart in Übereinstimmung mit der Synchronisationsinformation zu arbeiten, die in den Steuernachrichten für eine direkte Betriebsart enthalten ist.

22. Zellulares Kommunikationssystem (100) nach einem der Ansprüche 17 bis 21, wobei das zellulare Kommunikationssystem (100) ein zellulares TETRA-Kommunikationssystem ist.

23. Verfahren zum Betreiben einer Mobilstation (113) eines zellularen Kommunikationssystems (100) mit wenigstens einer Basisstation (101) und einer Mehrzahl anderer Mobilstation (105, 107, 109, 111), wobei das Kommunikationssystem eine TDMA-Kommunikation ("time division multiple access") für eine direkte Betriebsart und eine Kommunikation für eine Bündelbetriebsart ("trunked mode") zwischen den Mobilstationen unterstützt; wobei das Verfahren die Schritte aufweist:
Eintreten in einer Controllerbetriebsart für eine direkte Betriebsart;
Erzeugen eine Synchronisationszeitbasis für Kommunikationen mit direkter Betriebsart durch die andern Mobilstationen (105, 107, 109, 111) aus der Mehrzahl; und
Senden von Steuernachrichten für eine direkte Betriebsart zu anderen Mobilstationen (105, 107, 109, 111) auf einer Mehrzahl verfügbarer Kommunikationskanäle für eine direkte Betriebsart in Übereinstimmung mit der erzeugten Synchronisationszeitbasis, wobei die Steuernachrichten für eine direkte Betriebsart zur Verwendung durch die anderen Mobilstationen (105, 107, 109, 111) für einen Aufbau eines Anrufs mit direkter Betriebsart gesendet werden, der mit der Synchronisationszeitbasis synchronisiert ist und vor dem Anrufaufbau des Anrufs mit direkter Betriebsart synchronisiert mit der Synchronisationszeitbasis gesendet werden;
wobei die Steuernachricht für eine direkte Betriebsart umfasst:
(i) Information, die die Mehrzahl verfügbarer Kommunikationskanäle für eine direkte Betriebsart identifizieren, welche für den Anruf mit direkter Betriebsart zwischen wenigstens zwei (109, 111) der anderen Mobilstationen (105, 107, 109, 111) in der Mehrzahl verfügbar sind; und
(ii) Synchronisationsinformation, die durch den Synchronisationsprozessor (211) erzeugt wird.

24. Verfahren nach Anspruch 23, wobei die Synchronisationsinformation Zeitrahmeninformation und/oder Zeitschlitzinformation umfasst, die den Zeitrahmen und den Zeitschlitz identifizieren, in welchem die Steuernachricht für eine direkte Betriebsart gesendet wird.

## Revendications

1. Station mobile (113) pour un système de communication cellulaire (100) comprenant au moins une station de base (101) et une pluralité d'autres stations mobiles (105, 107, 109, 111), le système de communication prenant en charge les techniques d'accès multiple par répartition dans le temps, TDMA, de communication en mode direct et de communication en mode ressources partagées entre les stations mobiles (105, 107, 109, 111), la station mobile (113) comprenant :
des moyens (209) pour entrer dans un mode contrôleur de mode direct ;
un processeur de synchronisation (211) pour générer une base de temps de synchronisation pour les communications en mode direct par les autres stations mobiles (105, 107, 109, 111) de la pluralité ;
des moyens (209, 205) pour transmettre des messages de commande de mode direct aux autres stations mobiles (105, 107, 109, 111) sur une pluralité de canaux de communication en mode direct disponibles en fonction de la base de temps de synchronisation générée, les messages de commande de mode direct étant transmis pour être utilisés par les autres stations mobiles (105, 107, 109, 111) pour l'établissement d'un appel en mode direct synchronisé sur la base de temps de synchronisation et étant transmis avant l'établissement de l'appel en mode direct synchronisé sur la base de temps de synchronisation ;
les messages de commande de mode direct comprenant :
(i) des informations identifiant la pluralité de canaux de communication en mode direct disponibles qui sont disponibles pour l'appel en mode direct entre au moins deux (109, 111) des autres stations mobiles (105, 107, 109, 111) de la pluralité ; et
(ii) des informations de synchronisation produites par le processeur de synchronisation (211).

2. Station mobile (113) selon la revendication 1, dans laquelle les moyens de transmission (209, 205) sont aptes à transmettre les messages de commande de mode direct multiplexés dans le temps sur la pluralité de canaux de communication en mode direct disponibles.

3. Station mobile (113) selon la revendication 2 ou la revendication 3, dans laquelle le système de communication (100) utilise des trames temporelles ayant une pluralité d'intervalles de temps et dans laquelle les moyens de transmission (209, 205) sont aptes à effectuer un multiplexage temporel entre la pluralité de canaux de communication en mode direct disponibles, à l'échelle des trames temporelles.

4. Station mobile (113) selon la revendication 3, dans laquelle les moyens de transmission (209, 205) sont aptes à transmettre dans au moins un premier intervalle de temps d'une trame temporelle et la station mobile (113) comprend en outre un récepteur (213, 217) apte à effectuer une mesure radio dans au moins un deuxième intervalle de temps de la trame temporelle.

5. Station mobile (113) selon la revendication 4, dans laquelle le récepteur (213, 217) est apte à déterminer une caractéristique radio en réponse à la mesure radio et la station mobile (113) est apte à inclure des informations associées à la caractéristique radio dans les messages de commande de mode direct transmis.

6. Station mobile (113) selon l'une quelconque des revendications 3 à 5, dans laquelle les trames temporelles de chaque canal de la pluralité de canaux de communication en mode direct disponibles sont agencées en une multi-trame, chaque multi-trame comprenant une trame de commande désignée, et les moyens de transmission (209, 205) sont aptes à transmettre les messages de commande de mode direct sur chaque canal de la pluralité de canaux de communication en mode direct disponibles dans la trame de commande désignée de chaque canal de la pluralité de canaux de communication en mode direct disponibles.

7. Station mobile (113) selon la revendication 6, dans laquelle les multi-trames de la pluralité de canaux de communication en mode direct disponibles sont décalées de telle sorte que les trames de commande désignées de la pluralité de canaux radio de communication en mode direct disponibles ne coïncident pas entre elles.

8. Station mobile (113) selon l'une quelconque des revendications 2 à 7, dans laquelle les informations associées à un premier canal de communication en mode direct disponible de la pluralité de canaux de communication en mode direct disponibles sont transmises sur un deuxième canal de communication en mode direct disponible de la pluralité de canaux radio de communication en mode direct.

9. Station mobile (113) selon l'une quelconque des revendications précédentes, dans laquelle la station mobile (113) ne dispose pas d'une fonctionnalité de prise en charge d'un service entre la station mobile (113) et une autre station mobile.

10. Station mobile (113) selon l'une quelconque des revendications précédentes, dans laquelle les informations de synchronisation comprennent des informations de trame temporelle identifiant une trame temporelle dans laquelle le message de commande de mode direct doit être transmis.

11. Station mobile (113) selon l'une quelconque des revendications précédentes, dans laquelle les informations de synchronisation comprennent des informations d'intervalle de temps identifiant un intervalle de temps dans lequel le message de commande de mode direct doit être transmis.

12. Station mobile (113) selon l'une quelconque des revendications précédentes, dans laquelle les messages de commande de mode direct comprennent des informations indiquant la disponibilité de chaque intervalle de temps ou canal logique individuel pour chaque canal de la pluralité de canaux de communication en mode direct disponibles.

13. Station mobile (113) selon l'une quelconque des revendications précédentes, dans laquelle les messages de commande de mode direct comprennent des informations indiquant une réservation de service spécifique d'un ou plusieurs canaux de la pluralité de canaux de communication en mode direct.

14. Station mobile (113) selon l'une quelconque des revendications précédentes, dans laquelle les messages de commande de mode direct comprennent des informations indiquant une réservation de service spécifique de chaque canal de la pluralité de canaux de communication en mode direct.

15. Station mobile (113) selon l'une quelconque des revendications précédentes, dans laquelle au moins l'un des messages de commande de mode direct comprend une identification d'une unité distante associée à un appel entrant sur l'un quelconque des canaux de la pluralité de canaux de communication en mode direct.

16. Station mobile (113) selon l'une quelconque des revendications précédentes, dans laquelle la station mobile (113) est apte à fonctionner selon les procédures TETRA normalisées.

17. Système de communication cellulaire (100) comprenant au moins une station de base (101), une station mobile de commande (113) et une pluralité d'autres stations mobiles (105, 107, 109, 111), le système de communication (100) prenant en charge les techniques d'accès multiple par répartition dans le temps, TDMA, de communication en mode direct et de communication en mode ressources partagées ; la station mobile de commande (113) comprenant :
des moyens (209) pour entrer dans un mode contrôleur de mode direct ;
un processeur de synchronisation (211) pour générer une base de temps de synchronisation pour les communications en mode direct par les autres stations mobiles (105, 107, 109, 111) de la pluralité ;
des moyens (209, 205) pour transmettre des messages de commande de mode direct aux autres stations mobiles (105, 107, 109, 111) sur une pluralité de canaux de communication en mode direct disponibles en fonction de la base de temps de synchronisation générée, les messages de commande de mode direct étant transmis pour être utilisés par les autres stations mobiles (105, 107, 109, 111) pour l'établissement d'un appel en mode direct synchronisé sur la base de temps de synchronisation et étant transmis avant l'établissement de l'appel en mode direct synchronisé sur la base de temps de synchronisation ;
les messages de commande de mode direct comprenant :
(i) des informations identifiant la pluralité de canaux de communication en mode direct disponibles qui sont disponibles pour l'appel en mode direct entre au moins une première (109) et une deuxième (111) stations mobiles de la pluralité des autres stations mobiles (105, 107, 109, 111) ; et
(ii) des informations de synchronisation produites par le processeur de synchronisation (211).

18. Système de communication cellulaire (100) selon la revendication 17, dans lequel la première station mobile (109) comprend :
des moyens pour recevoir les messages de commande de mode direct, et
des moyens pour le synchroniser sur la station mobile de commande (113) en réponse à la réception des messages de commande de mode direct.

19. Système de communication cellulaire (100) selon la revendication 17 ou la revendication 18, dans lequel la première station mobile (109) est apte à initier un service en mode direct et la première station mobile (109) comporte en outre des moyens pour commander le service en mode direct.

20. Système de communication cellulaire (100) selon l'une quelconque des revendications 17 à 19, dans lequel la station mobile de commande (113) ne dispose pas d'une fonctionnalité de gestion d'un service en mode direct actif.

21. Système de communication cellulaire (100) selon l'une quelconque des revendications 17 à 20, dans lequel la première station mobile (109) comprend :
un émetteur-récepteur apte à recevoir les messages de commande de mode direct sur un premier canal de communication en mode direct disponible de la pluralité de canaux de communication en mode direct disponibles ;
des moyens pour déterminer un deuxième canal de communication en mode direct disponible souhaité en réponse aux canaux de communication en mode direct disponibles indiqués dans les messages de commande en mode direct ; et
des moyens pour ajuster l'émetteur-récepteur de façon qu'il fonctionne sur le deuxième canal de communication en mode direct disponible en fonction des informations de synchronisation incluses dans les messages de commande en mode direct.

22. Système de communication cellulaire (100) selon l'une quelconque des revendications 17 à 21, dans lequel le système de communication cellulaire (100) est un système de communication cellulaire TETRA.

23. Procédé de fonctionnement d'une station mobile (113) d'un système de communication cellulaire (100) comprenant au moins une station de base (101) et une pluralité d'autres stations mobiles (105, 107, 109, 111), le système de communication (100) prenant en charge les techniques d'accès multiple par répartition dans le temps, TDMA, de communication en mode direct et de communication en mode ressources partagées entre les stations mobiles ; le procédé comprenant les étapes suivantes :
entrer dans un mode contrôleur de mode direct ;
générer une base de temps de synchronisation pour les communications en mode direct par les autres stations mobiles (105, 107, 109, 111) de la pluralité ; et
transmettre des messages de commande de mode direct aux autres stations mobiles (105, 107, 109, 111) sur une pluralité de canaux de communication en mode direct disponibles en fonction de la base de temps de synchronisation générée, les messages de commande de mode direct étant transmis pour être utilisés par les autres stations mobiles (105, 107, 109, 111) pour l'établissement d'un appel en mode direct synchronisé sur la base de temps de synchronisation et étant transmis avant l'établissement de l'appel en mode direct synchronisé sur la base de temps de synchronisation ;
les messages de commande de mode direct comprenant :
(i) des informations identifiant la pluralité de canaux de communication en mode direct disponibles qui sont disponibles pour l'appel en mode direct entre au moins deux (109, 111) autres stations mobiles ; et
(ii) des informations de synchronisation produites par le processeur de synchronisation (211).

24. Procédé selon la revendication 23, dans lequel les informations de synchronisation comprennent au moins une information de trame temporelle et une information d'intervalle de temps, identifiant la trame temporelle et l'intervalle de temps dans lesquels le message de commande en mode direct est transmis.
